# EUROPÄISCHE PATENTSCHRIFT

(11) **EP 2 695 280 B1**
(45) Veröffentlichungstag und Bekanntmachung des Hinweises auf die Patenterteilung: **19.08.2015**
(21) Anmeldenummer: 12712220.8
(22) Anmeldetag: 12.03.2012
(51) Int. Cl.: H02J 7/02, B60L 11/18, B60L 3/00, H01F 38/14

(54) **SYSTEM ZUR BERÜHRUNGSLOSEN ENERGIEÜBERTRAGUNG AN EIN FAHRZEUG, VERFAHREN ZUM DETEKTIEREN VON METALLSTÜCKEN BEI DEM SYSTEM, VERFAHREN ZUM POSITIONIEREN DES FAHRZEUGES UND ZUR BESTIMMUNG EINER RICHTUNG FÜR EIN FAHRZEUG ZUR ERREICHUNG EINER OPTIMALEN POSITION**
SYSTEM FOR WIRELESS POWER TRANSFER TO A VEHICLE, METHOD FOR METAL ARTICLE DETECTION IN SAID SYSTEM, METHOD FOR POSITIONING THE VEHICLE AND FOR DEFINING DIRECTION FOR OPTIMAL POSITIONING OF VEHICLE
SYSTÈME DE TRANSMISSION D'ÉNERGIE SANS CONTACT À UN VÉHICULE, PROCÉDÉ DE DÉTECTION DE PIÈCES MÉTALLIQUES DANS LE SYSTÈME, PROCÉDÉ DE POSITIONNEMENT D'UN VÉHICULE, PROCÉDÉ DE DÉTERMINATION DE DIRECTION DU VÉHICULE POUR PLACEMENT OPTIMAL

(30) Priorität: 04.04.2011 DE 102011015980
(43) Veröffentlichungstag der Anmeldung: 12.02.2014
(60) Teilanmeldung: 15000554.4
(73) Patentinhaber: Sew-Eurodrive GmbH & Co. KG, 76646 Bruchsal (DE)
(72) Erfinder: HUA, Zhidong, 76137 Karlsruhe (DE); SCHÄFER, Thomas, 76689 Neuthard (DE); SIMON, Olaf, 76646 Bruchsal (DE); MAHLEIN, Jochen, 76139 Karlsruhe (DE); EGGER, Björn, 76646 Bruchsal (DE); SCHMIDT, Josef, 76676 Graben-Neudorf (DE)
(86) Internationale Anmeldenummer: PCT/EP2012/001089
(87) Internationale Veröffentlichungsnummer: WO 2012/136303

(56) Entgegenhaltungen:
- WO-A2-2008/051611
- DE-A1-102009 013 694
- DE-A1-102009 033 237
- DE-A1-102009 033 239

## Beschreibung

Die Erfindung betrifft ein System zur berührungslosen Übertragung von Energie von einer Primärwicklung an ein eine an die Primärwicklung induktiv koppelbare Sekundärwicklung umfassendes Fahrzeug, ein Verfahren zum Detektieren von Metallstücken bei dem System, Verfahren zum Positionieren eines Fahrzeuges, ein Verfahren zur Bestimmung einer Richtung und ein Positioniersteuerverfahren.

Aus der WO 2008/051611 A2 ist ein kabelloses Hochleistungsübertragungssystem bekannt.

Aus der DE 10 2009 013694 A1 ist ein Energieübertragungssystem mit mehreren Primärspulen bekannt.

Aus der DE 10 2009 033 237 A1 ist eine Vorrichtung zur induktiven Übertragung elektrischer Energie bekannt.

Aus der DE 10 2009 033239 A1 ist eine Vorrichtung zur induktiven Übertragung elektrischer Energie bekannt.

Somit ist bekannt, über eine induktive Kopplung von einer Primärwicklung an eine Sekundärwicklung Energie zu übertragen.

Der Erfindung liegt daher die Aufgabe zugrunde, eine Positionierung eines Fahrzeugs in einer Position optimaler Kopplung bei der berührungslosen Energiezufuhr an das Fahrzeug weiterzubilden.

Erfindungsgemäß wird die Aufgabe
- bei dem System zur berührungslosen Übertragung von Energie von einer Primärwicklung an ein eine an die Primärwicklung induktiv koppelbare Sekundärwicklung umfassendes Fahrzeug nach den in Anspruch 5 und
- bei dem Verfahren zum Detektieren von Metallstücken bei dem System nach den in Anspruch 1.

Wichtige Merkmale der Erfindung bei dem System zur berührungslosen Übertragung von Energie von einer Primärwicklung an ein eine an die Primärwicklung induktiv koppelbare Sekundärwicklung umfassendes Fahrzeug sind, dass die Primärwicklung stationär angeordnet ist und mit einem Wechselstrom beaufschlagbar ist,
wobei eine Wicklungsanordnung stationär angeordnet ist, welche eine erste und eine zweite Wicklung aufweist,
insbesondere wobei die Wicklungsanordnung mittig zur Primärwicklung angeordnet ist,
wobei die erste und zweite Wicklung jeweils aus zumindest zwei Teilwicklungen zusammengesetzt ist, wobei die von den Teilwicklungen einer jeweiligen Wicklung umwickelten Flächen einem von der Primärwicklung erzeugten magnetischen Fluss ausgesetzt sind und voneinander beabstandet sind, insbesondere derart, dass sie von keiner Flusslinie des von der Primärwicklung erzeugten Flusses gemeinsam durchsetzt sind,
wobei die Teilwicklungen jeweils eine derartige Wicklungszahl und eine derartige umwickelte Fläche aufweisen, dass die vom, insbesondere sich ändernden, magnetischen Fluss der Primärwicklung induzierten Spannungen der Teilwicklungen betragsgleich sind,
insbesondere wobei die erste Wicklung derart verdreht zur zweiten Wicklung angeordnet ist, dass jede Teilwicklung der ersten Wicklung an jede Teilwicklung der zweiten Wicklung induktiv gekoppelt angeordnet ist.

Von Vorteil ist dabei, dass eine Detektion von Metallen ermöglicht ist, obwohl von der Primärwicklung ein starkes Feld erzeugt wird. Denn die Teilwicklungen sind derart im Feld angeordnet oder das Feld ist derart homogen, dass die vom Feld induzierten Spannungen betragsgleich sind und vorzugsweise mit unterschiedlichem Vorzeichen bewirkt sind. Daher hebt sich die Wirkung des veränderlichen Feldes der Primärwicklung auf und es kann völlig unabhängig vom Feld der Primärspule der Raumbereich der berührungslosen Energieübertragung überwacht werden auf das Vorhandensein eines Metallstücks. In einer einfachen Ausführung werden die Wicklungen gleichartig ausgeführt, also auch die Teilwicklungen der Wicklungen, und die Wicklungen werden 90° verdreht angeordnet, wobei ein geringer Abstand der Wicklungen voneinander, insbesondere also weniger als ein Zehntel des größten Wicklungsdurchmessers, erlaubt ist. Somit ist eine fast flächige Wicklungsanordnung am Fahrzeug und am Boden erreicht, die im Wesentlichen in Normalenrichtung von den Flusslinien der Primärwicklung durchsetzt wird.

Bei einer vorteilhaften Ausgestaltung weisen die Teilwicklungen jeweils dieselbe Wicklungszahl und umwickelte Fläche auf und die umwickelten Flächen sind parallel ausgerichtet. Von Vorteil ist dabei, dass eine einfache Fertigung ausführbar ist, insbesondere als Leiterplatte.

Bei einer vorteilhaften Ausgestaltung ist eine weitere Wicklungsanordnung am Fahrzeug angeordnet und weist ebenfalls eine erste und eine zweite Wicklung auf, welche wiederum Teilwicklungen aufweisen. Von Vorteil ist dabei, dass die Wicklungsanordnung einfach als Leiterplattenwicklung herstellbar ist und somit in gleicher Weise an Fahrzeugen und am stationären Teil installierbar ist.

Bei einer vorteilhaften Ausgestaltung weisen die Wicklungen jeweils eine Mittelanzapfung auf. Von Vorteil ist dabei, dass eine besonders einfache und kostengünstige Herstellung der Wicklungsanordnung und mit Wicklungen und Teilwicklungen herstellbar ist.

Bei einer vorteilhaften Ausgestaltung sind die Wicklungen eben ausgeführt, insbesondere parallel zueinander ausgerichtet und/oder weisen parallel zueinander ausgerichtete umwickelte Flächen auf. Von Vorteil ist dabei, dass eine einfache Herstellung erreichbar ist.

Wichtige Merkmale bei dem Verfahren zum Detektieren von Metallstücken bei einem System zur berührungslosen Übertragung von Energie von einer Primärwicklung an ein eine an die Primärwicklung induktiv koppelbare Sekundärwicklung umfassendes Fahrzeug sind, dass in die Primärwicklung ein Wechselstrom eingeprägt wird,
wobei im Bereich der Primärwicklung eine Wicklungsanordnung angeordnet ist, welche eine erste und eine zweite Wicklung aufweist,
insbesondere wobei die Wicklungsanordnung mittig zur Primärwicklung angeordnet ist,
wobei die erste und zweite Wicklung jeweils aus zumindest zwei Teilwicklungen zusammengesetzt sind, wobei die von den Teilwicklungen einer jeweiligen Wicklung umwickelten Flächen einem von der Primärwicklung erzeugten magnetischen Fluss ausgesetzt sind und voneinander beabstandet sind, insbesondere derart, dass sie von keiner Flusslinie des von der Primärwicklung erzeugten Flusses gemeinsam durchsetzt sind,
wobei die Teilwicklungen jeweils eine derartige Wicklungszahl und eine derartige umwickelte Fläche aufweisen, dass die vom, insbesondere sich ändernden, magnetischen Fluss der Primärwicklung induzierten Spannungen der Teilwicklungen betragsgleich sind,
wobei die erste Wicklung derart verdreht und beabstandet zur zweiten Wicklung angeordnet ist, dass jede Teilwicklung der ersten Wicklung an jede Teilwicklung der zweiten Wicklung induktiv gekoppelt angeordnet ist,
wobei an die erste Wicklung eine Wechselspannung angelegt wird und die Differenz der Beträge der an den Teilwicklungen der zweiten Wicklung induzierten Spannungen auf Überschreiten eines kritischen Wertes überwacht wird.

Von Vorteil ist dabei, dass Metall detektierbar ist und somit das Überschreiten einer kritischen Temperatur überwachbar ist. Auf diese Weise ist die Brandgefahr verminderbar.

Bei einer vorteilhaften Ausgestaltung weist ein
- erster Anteil von Flusslinien die erste Teilwicklung der ersten Wicklung und die erste Teilwicklung der zweiten Wicklung durchsetzen,
- ein zweiter Anteil von Flusslinien die erste Teilwicklung der ersten Wicklung und die zweite Teilwicklung der zweiten Wicklung durchsetzen,
- ein dritter Anteil von Flusslinien die zweite Teilwicklung der ersten Wicklung und die erste Teilwicklung der zweiten Wicklung durchsetzen,
- ein vierter Anteil von Flusslinien die zweite Teilwicklung der ersten Wicklung und die zweite Teilwicklung der zweiten Wicklung durchsetzen,
wobei diese Anteile im Wesentlichen gleich groß sind. Von Vorteil ist dabei, dass die Wicklungen in einfacher Weise herstellbar sind.

Bei einer vorteilhaften Ausgestaltung sind die Teilwicklungen als Flachwicklungen ausgeführt, insbesondere parallel zueinander ausgerichtet sind. Von Vorteil ist dabei, dass die Teilwicklungen auf einer Leiterplatte ausrichtbar sind.

Bei einer vorteilhaften Ausgestaltung werden die induzierten Spannungen der beiden Teilwicklungen einer Wheatstone-Brückenschaltung zugeführt. Von Vorteil ist dabei, dass die Differenz der induzierten Spannungen mit einem sehr guten Signal-Rausch-Verhältnis, also mit hoher Empfindlichkeit störsicher, bestimmbar ist.

Wichtige Merkmale bei dem Verfahren zum Positionieren eines Fahrzeuges in eine Position optimaler Kopplung zwischen einer Primärwicklung und einer Sekundärwicklung bei einem System zur berührungslosen Übertragung von Energie von der Primärwicklung an ein die an die Primärwicklung induktiv koppelbare Sekundärwicklung umfassendes Fahrzeug sind, dass in die Primärwicklung ein Wechselstrom eingeprägt wird,
wobei im Bereich der Primärwicklung und am Fahrzeug jeweils eine Wicklungsanordnung angeordnet ist, welche jeweils eine erste und eine zweite Wicklung aufweist,
insbesondere wobei die im Bereich der Primärwicklung angeordnete Wicklungsanordnung mittig zur Primärwicklung angeordnet ist,
wobei, insbesondere nach Erreichen der optimalen Position, gilt, dass
die erste und zweite Wicklung jeweils aus zumindest zwei Teilwicklungen zusammengesetzt sind, wobei die von den Teilwicklungen einer jeweiligen Wicklung umwickelten Flächen einem von der Primärwicklung erzeugten magnetischen Fluss ausgesetzt sind und voneinander beabstandet sind, insbesondere derart, dass sie von keiner Flusslinie des von der Primärwicklung erzeugten Flusses gemeinsam durchsetzt sind,
wobei die Teilwicklung jeweils eine derartige Wicklungszahl und eine derartige umwickelte Fläche aufweisen, dass die vom, insbesondere sich ändernden, magnetischen Fluss der Primärwicklung induzierten Spannungen der Teilwicklungen betragsgleich sind,
wobei die erste Wicklung derart verdreht und beabstandet zur zweiten Wicklung angeordnet ist, dass jede Teilwicklung der ersten Wicklung an jede Teilwicklung der zweiten Wicklung induktiv gekoppelt angeordnet ist,
wobei vor Erreichen der optimalen Position
an die erste Wicklung (31) der im Bereich der Primärwicklung angeordneten Wicklungsanordnung eine Wechselspannung angelegt wird und das Fahrzeug in diejenige Richtung gesteuert wird, wo die Beträge der an den Teilwicklungen der zweiten Wicklung der am Fahrzeug angeordneten Wicklungsanordnung (630) induzierten Spannungen maximal werden, wobei die induzierten Spannungen eine Phasenverschiebung von im Wesentlichen 180° zur Wechselspannung aufweisen.

Von Vorteil ist dabei, dass ein schnelles und zielgerichtetes Positionieren des Fahrzeugs ermöglicht ist und sogar schon während der Positionierung die Primärwicklung mit Starkstrom bestrombar ist, so dass das Fahrzeug während des Positionierens schon beladbar ist mit Energie. Denn trotz der hohen Felder ist die Bestimmung der Fehlpositionierung mit Hilfe der Wicklungen ermöglicht, wobei die Wicklungen auch zur Datenübertragung dienen.

Wichtige Merkmale bei dem Verfahren zur Bestimmung einer Richtung für ein Fahrzeug zur Erreichung einer optimalen Position, in welcher eine optimale Kopplung, insbesondere maximale Kopplung, zwischen einer Sekundärwicklung des Fahrzeugs und einer stationär angeordneten Primärwicklung erreichbar ist, sind, dass von einer Wicklung der im Bereich der Primärwicklung angeordneten Wicklungsanordnung, also vom Sender, eine Information ausgesendet wird und in einem ersten Zeitabschnitt von einer ersten Teilwicklung der Wicklung der am Fahrzeug angeordneten Wicklungsanordnung, also des Empfängers, empfangen wird,
nachfolgend in einem anderen Zeitabschnitt Information von der anderen Teilwicklung der Wicklung der am Fahrzeug angeordneten Wicklungsanordnung, also des Empfängers, empfangen wird,
wobei die Beträge der jeweils induzierten Spannungen ermittelt werden und bestimmt und/oder verglichen wird, welche der Teilwicklungen der Wicklung näher am Empfänger sich befinden.
insbesondere wobei am Fahrzeug und im Beriech der Primärwicklung jeweils eine entsprechende Wicklung um 90° verdreht angeordnet ist, so dass auch hier die Bestimmung ermöglicht, welche der zugehörigen Teilwicklungen näher am Sender ist,
wobei aus den Ergebnissen die Richtung bestimmt wird. Von Vorteil ist dabei, dass die Position schnell und zielgerichtet erreichbar ist.

Bei einer vorteilhaften Ausgestaltung werden bei der Richtungsbestimmung die Beträge der induzierten Spannungen berücksichtigt, insbesondere so dass insgesamt eine verbesserte Richtung bestimmt wird, in welcher der Sender sich vom Empfänger aus gesehen befindet.

Von Vorteil ist dabei, dass ein Anzeigemittel, insbesondere ein optisches und/oder akustisches Anzeigemittel, als Einparkhilfe im Fahrzeug vorsehbar ist oder alternativ ein automatisches Einparken des Fahrzeugs ermöglicht ist, indem die bestimmte Richtung einer Fahrzeugpositioniersteuerung zugeführt wird und diese das Fahrzeug in die bestimmte Richtung zumindest zeitabschnittsweise bewegt.

Wichtige Merkmale bei dem Positioniersteuerverfahren für ein Fahrzeug sind, dass zeitlich wiederkehrend nach einem vorgenannten Verfahren eine jeweilige Richtung bestimmt wird, in welche das Fahrzeug zumindest so lange gesteuert wird, bis erneut eine aktualisierte Richtung bestimmt wird.

Von Vorteil ist dabei, dass ein schnelles Erreichen der optimalen Position durch das Fahrzeug ermöglicht wird.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
In der Figur 1 ist ein stationärer Teil einer Ladestation für ein induktiv aufladbares Elektrofahrzeug schematisch skizziert.

In der Figur 2 ist die Wicklungsanordnung zur Datenübertragung gezeigt, wobei diese Wicklungsanordnung dem stationären Teil zugehört und aus zwei senkrecht übereinander gelegten Wicklungen besteht. Eine ebensolche Wicklungsanordnung ist aber auch am Fahrzeug angeordnet.

In der Figur 3 sind die induktiven Kopplungen der Wicklungsanordnung aus Figur 2 gezeigt und mit einem Sender 31 beziehungsweise Empfänger 30 verbunden. Die Anordnung nach Figur 3 ist also einerseits am stationären Teil vorgesehen und andererseits am Fahrzeug.

In der Figur 4 ist die Verbindung von Sender 31 beziehungsweise Empfänger 30 zum Modem 1 gezeigt.

In der Figur 5 sind verschiedene Formen einer der mit dem Empfänger 30 beziehungsweise Sender 31 verbundenen Wicklungen gezeigt.

In der Figur 6 ist die Wicklungsanordnung des stationären Anlagenteils zur Datenübertragung und die entsprechende, am Elektrofahrzeug befestigte Wicklungsanordnung zur Datenübertragung gezeigt.

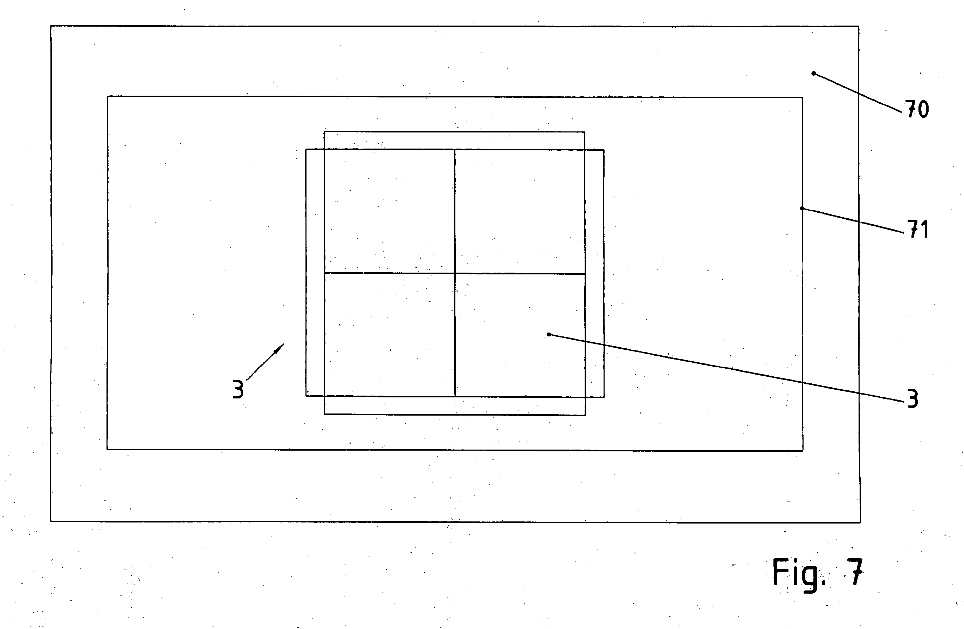

In der Figur 7 ist der stationäre Teil der Anlage in Draufsicht gezeigt.

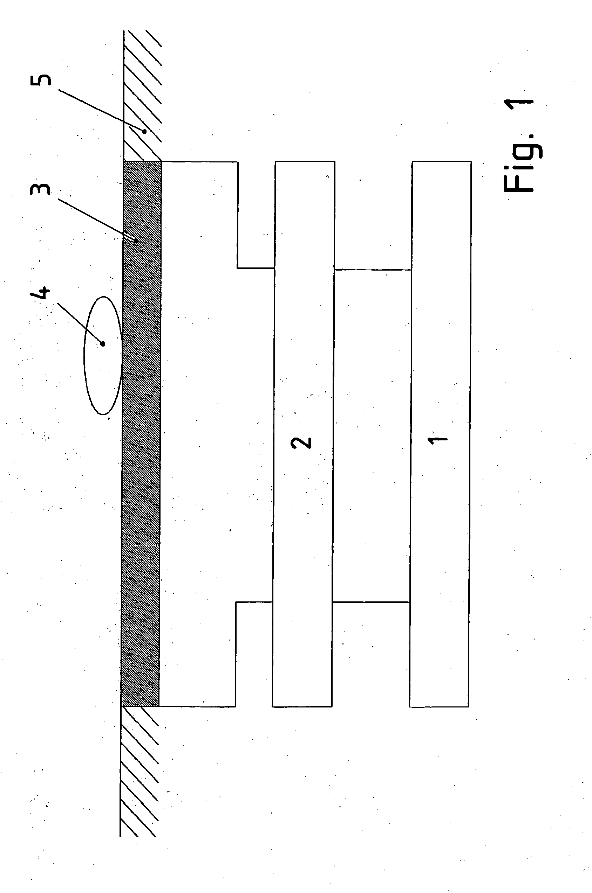

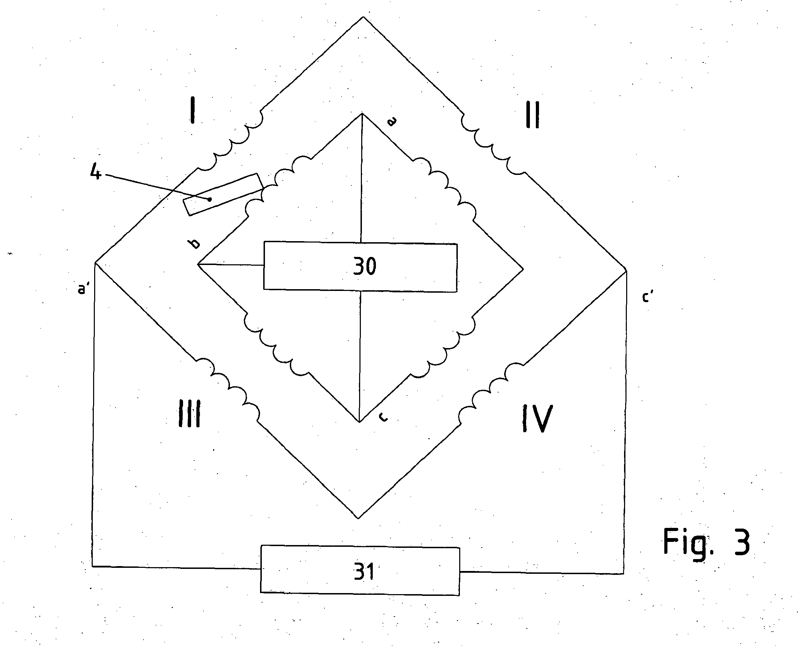

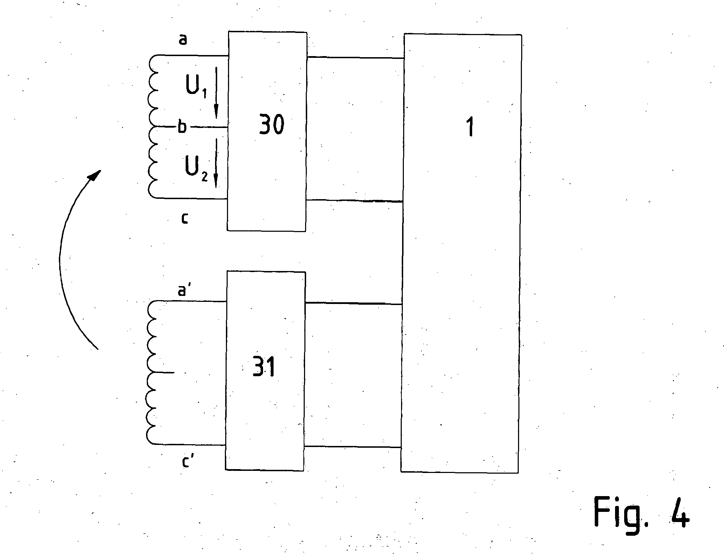

Wie in den Figuren 1 bis 4 dargestellt weist der stationäre Teil der Anlage ein Modem 1 auf, welches mit einem Sender 31 und Empfänger 30 verbunden ist. Fahrzeugseitig ist eine ebensolche Anordnung angeordnet, so dass bei induktiver Kopplung der mit den jeweiligen Sendern (31, 631) und Empfängern (30, 630) verbundenen Wicklungen eine Datenübertragung ermöglicht ist.

Beispielsweise wird zu Beginn das Modem eingeschaltet, danach die Position des Fahrzeugs bestimmt oder zumindest die Richtung und/oder Entfernung, in welcher das Fahrzeug zur optimalen Position hin zu bewegen ist. Dabei wird unter optimaler Position diejenige Position verstanden, welche die maximale Kopplung zwischen Primärwicklung und Sekundärwicklung aufweist. Die Richtung oder Abweichung ist mit einem Anzeigemittel anzeigbar und/oder einer Positioniersteuerungsmittel zuleitbar. Nach dem Einparken oder auch schon während des Einparkens ist eine Identifikationsinformation übermittelbar und danach die Energieübertragung startbar, so dass dann der Energiespeicher aufladbar ist. Während des Aufladens des Energiespeichers werden Daten übertragen, so dass eine Laderegelung ermöglicht ist, insbesondere auch ein Stellen des Leistungsflusses auf der stationären Seite, also zur Primärwicklung hin.

Der Wicklungsbereich 3 weist dabei eine erste Wicklung auf mit Mittelanzapfung, also den Anschlüssen a, b und c. Eine baugleiche Wicklung mit den Anschlüssen a', b' und c' ist um 90° gedreht darüber gelegt.

Am Fahrzeug ist eine entsprechende Wicklungsanordnung vorgesehen.

Jede der Wicklungen weist eine erste und eine zweite Teilwicklung auf, wobei die beiden Teilwicklungen voneinander beabstandete umwickelte Flächen aufweisen. Vorzugsweise sind die beiden umwickelten Flächen parallel zu einer eine der umwickelten Flächen aufnehmenden Ebene verschoben, so dass die senkrechte Projektion der anderen umwickelten Fläche in die Ebene keine Schnittmenge aufweist zur erstgenannten umwickelten Fläche. Beide Teilwicklungen sind jedoch mit einer derartigen Wicklungszahl, umwickelten Flächengröße und Wicklungssinn ausgeführt, dass die in den beiden Teilwicklungen von einem homogenen Feld induzierten Spannungen betragsgleich sind, insbesondere aber entgegengesetztes Vorzeichen aufweisen. Dabei ist das homogene Feld von einer Primärwicklung 71 erzeugt, deren Feld im Beriech der Wicklungsanordnung im Wesentlichen homogen ist. Auf diese Weise ist eine vom Feld der Primärwicklung 71 völlig unabhängige und ungestörte Betriebsweise bei Metalldetektion, Fahrzeugpositionierung und/oder Datenübertragung ermöglicht.

Vorzugsweise sind die umwickelten Flächen betragsgleich, der Wicklungssinn unterschiedlich und die Wicklungszahl jeweils gleich.

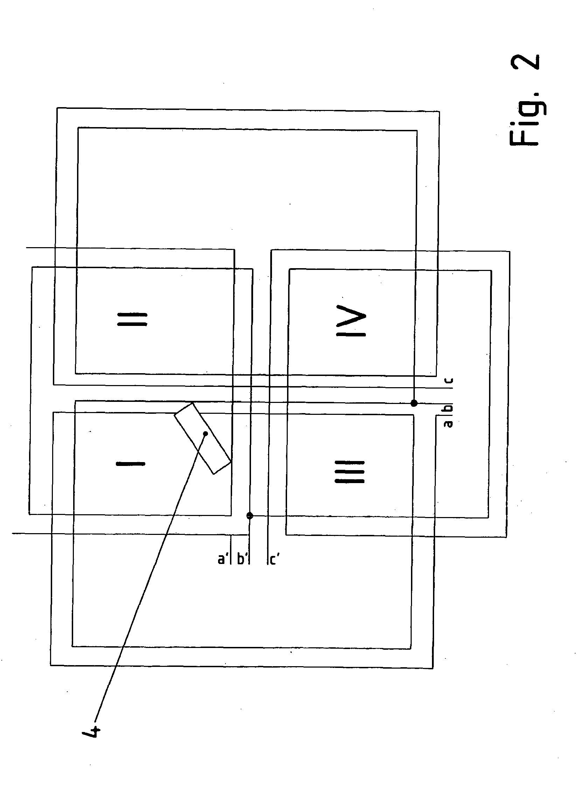

Wie in Figur 2 gezeigt, ist die zweite Wicklung um 90° gedreht angeordnet. Somit sind die beiden Teilwicklungen der zweiten Wicklung entsprechend gedreht angeordnet über der ersten Wicklung und es entstehen vier Kopplungsbereiche I, II, III, IV.

Zur Detektion von Metallstücken 4, welche bei der Energieübertragung erhitzt werden und somit Brandursache darstellen könnten, wenn Sie in Berührung kommen sollten mit entzündlichen Stoffen, wird die erste Wicklung als Sender verwendet. Dabei wird eine vorzugsweise hochfrequente Wechselspannung, beispielsweise mit einer Frequenz zwischen 0,5 und 15 MHz, an die Anschlüsse a und c angelegt. Die Wechselspannung wird dabei vom Sender 31 erzeugt.

Die an der zweiten Wicklung induzierten Spannungen werden vom Empfänger 30 erfasst und verarbeitet. Dabei tritt die Spannung U1 zwischen den Anschlüssen a und b auf und die Spannung U2 zwischen den Anschlüssen b und c.

Abweichungen zwischen U1 und U2 sind also auf infolge des Metallstücks 4 unterschiedlichen Kopplungen zurückzuführen.

Bei Vorhandensein eines Metallstücks 4 in einem der vier Kopplungsbereiche (I, II, III, IV) wird also U1 derart von U2 abweichen, insbesondere einen kritischen Abweichungsbetrag überschreiten, dass somit erkennbar ist für den Empfänger 30, dass die Kopplungen unterschiedlich stark sind, also ein Metallstück 4 im Übertragungsbereich vorhanden ist. Vorzugsweise wird daher bei Überschreiten des kritischen Abweichungsbetrags eine Warnung ausgelöst und das Übertragen von Leistung, insbesondere das Einprägen von Starkstrom in die Primärwicklung 71, verhindert.

Nach Reinigung der Oberfläche über der Primärwicklung 71 und dem Boden 5, in welchen die Primärwicklung eingelassen angeordnet ist, wird die Freigabe für das Übertragen von Leistung erteilt.

Wie in Figur 2 gezeigt, weisen die Teilwicklungen jeweils ein rechteckförmige Form auf.

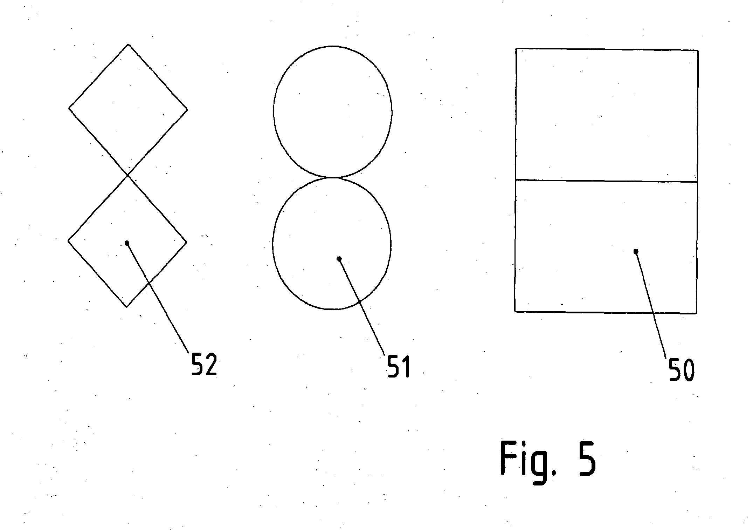

Wie in Figur 5 gezeigt, sind statt dieser rechteckförmigen Form 50 auch andere Formen, wie die zweite Form 52, wobei jede Teilwicklung quadratisch ausgeführt ist, ermöglicht oder wie die erste Form 51, wobei jede Teilwicklung kreisförmig ausgeführt ist.

Insgesamt ist im Boden 5 ein Halteteil 70, insbesondere Fundamentplatte, vorgesehen, welche die Primärwicklung 71 trägt, in welcher die Wicklungsanordnung, bestehend aus den beiden Wicklungen, mittig angeordnet ist. Somit sind die Teilwicklungen der Wicklungen symmetrisch zum Symmetriemittelpunkt angeordnet, so dass die von der Primärwicklung 71 in den Teilwicklungen induzierte Spannungen, welcher einer jeweiligen selben Wicklung zugeordnet sind, betragsgleich sind.

Bei einem weiteren erfindungsgemäßen Ausführungsbeispiel wird nach Feststellen der unterschiedlichen Kopplungsstärken, also beispielsweise verursacht durch ein Metallstück 4, dem Sender 31 mitgeteilt, dass er die Frequenz ändern soll.

Aus den dann bei verschiedenen Frequenzen erfassten induzierten Spannungen wird auf das Material des Metallstücks 4 und dessen Temperatur geschlossen. Somit ist sogar detektierbar, ob eine kritische Temperatur, beispielsweise 80°C oder 120° C, überschritten wird.

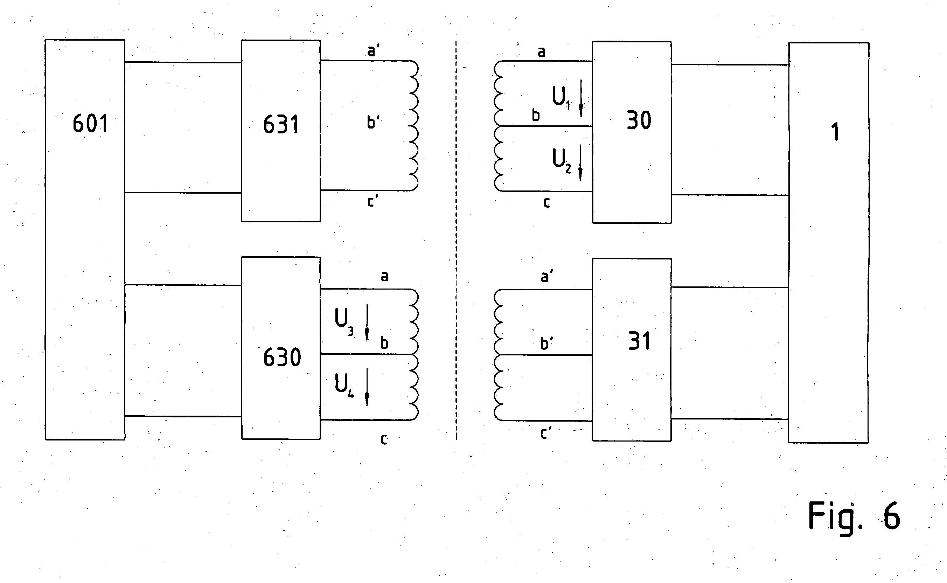

Wie in Figur 6 gezeigt, ist die Wicklungsanordnung aus Wicklungen, die jeweils aus zwei Teilwicklungen zusammengesetzt sind, sowohl am stationären Anlagenteil, insbesondere am Boden, als auch am Fahrzeug angeordnet. Somit ist also auch am Fahrzeug ein Modem 601 angeordnet, das mit einem Sender 631 und mit einem Empfänger 630 verbunden ist.

Somit ist einerseits Datenübertragung zwischen Fahrzeug und stationärem Teil ermöglicht und andererseits die Erfassung der Entfernung des Fahrzeugs von einer optimalen Position bestimmbar. Dabei ist die optimale Position dort, wo der geringstmögliche Abstand zwischen Fahrzeug und Primärwicklung erreicht ist, insbesondere wo die geringstmögliche Entfernung zwischen der Wicklung des Fahrzeugs und der Wicklung des stationären Anlagenteils besteht und die beiden Wicklungen parallel ausgerichtet sind, also die senkrechte Projektionen der beiden Wicklungen in die den Boden enthaltende Ebene im Wesentlichen deckungsgleich sind. Die Primärwicklung 71 ist derart angeordnet, dass an dieser Position die maximale Leistung übertagbar ist.

Zur Bestimmung der Abweichung wird beim Einparken des Fahrzeugs in zeitlichen Abständen wiederkehrend vom Sender 31 eine Wechselspannung an die Anschlüsse a' und c' angelegt, so dass die an den Wicklungen des Empfängers 630 am Fahrzeug induzierten Spannungen erfassbar sind.

Da an der optimalen Position die an den Teilwicklungen induzierten Spannungen den maximalen Betrag aufweisen, ist je nach Veränderung des induzierten Spannungsbetrags, ob das Fahrzeug sich der optimalen Position genähert hat oder nicht. Da fahrzeugseitig zwei zueinander senkrecht ausgerichtete Wicklungen angeordnet sind, ist diese Bestimmung der Spannungs-Veränderung in zwei zueinander senkrechten Richtungen ermöglicht. Somit ist sogar die Richtung zur Optimalen Position bestimmbar und ist mit Anzeigemitteln anzeigbar und/oder berücksichtigbar bei einer automatischen Positionierung des Fahrzeugs. Bei einer solchen automatischen Positionierung steuert eine Regeleinheit das Fahrzeug hin auf die optimale Position, indem der Regeleinheit eingangsseitig die bestimmte Richtung zugeführt wird.

Zur Herstellung einer eindeutigen Bestimmung des Abstands des Fahrzeugs von der optimalen Position wird auch die Phasenlage der in einer Teilwicklung der Wicklung des Empfängers 630 induzierten Spannung zur Spannung in der Wicklung des Senders 31 berücksichtigt. Hierzu wird bei der Datenübertragung ein Synchronisationszeitpunkt mitgeteilt, beispielsweise durch eine digitale Wortinformation. Die Phasenlage wird dann relativ zu diesem Zeitpunkt bestimmt.

Die Phasenlage ist deshalb wichtig, weil die induzierte Spannung im Wesentlichen um einen Winkel β phasenverschoben zur Senderspannung ist, solange die Empfängerwicklung außerhalb der Senderwicklung sich befindet, also das Fahrzeug in großer Entfernung von der optimalen Position sich befindet. Dabei wird die Übertragungszeit der elektromagnetischen Wellen vernachlässigt, weil eine entsprechend geringe Sendefrequenz von weniger als 15 MHz verwendet wird und die Abstände zwischen Senderwicklung und Empfängerwicklung geringer sind als 3 Meter. Wenn die Empfängerwicklung mit der Senderwicklung überlappt, also beispielsweise die senkrechten Projektionen der beiden Wicklungen jeweils dieselbe oder fast dieselbe umwickelte Fläche aufweisen, ist die induzierte Spannung um einen Winkel (β+180°) phasenverschoben.

Somit ist aufgrund der Phasenverschiebung der Abstandsbereich bestimmbar.

Wenn das Fahrzeug sich der optimalen Position nähert, weisen also die Teilwicklungen der Wicklung des Empfängers 630 am Fahrzeug im Wesentlichen dieselbe Phasenlage auf. Bei optimaler Position weist dann die an der ersten Teilwicklung der Wicklung induzierte Spannung zueinander entgegengesetztes Vorzeichen auf zur an der anderen Teilwicklung der Wicklung induzierten Spannung. Somit ist dann die Phasenverschiebung 180° zwischen den beiden induzierten Spannungen.

Beim Bestimmen des Abstandes zur optimalen Position oder bei Bestimmen der Richtung zur optimalen Position werden also nicht nur die Beträge der induzierten Spannungen sondern auch die Phasenlagen, insbesondere die relative Phasenlage, verwendet. Besonders verteilhaft ist auch die Verwendung der Summe der induzierten Spannungen, welche an der optimalen Position das Maximum erreicht.

Analog zur vorgenannten Schilderung ist auch von der stationären Anlage aus die Entfernung des Fahrzeuges von der optimalen Position bestimmbar, indem der Sender 631 statt des Senders 31 am stationären Anlagenteil ein Wechselfeld sendet, welches der Empfänger 30 detektiert und aus den entsprechenden, an den Teilwicklungen induzierten Spannungen den Abstand und/oder die Richtung zur optimalen Position bestimmt.

Somit ist also mit dem Empfänger 30 ebenfalls der Abstand und/oder die Richtung zur optimalen Position bestimmbar.

Mit beiden Empfängern (30, 630) ist aber auch das Verfahren zur Detektion von Metallstücken im Kopplungsberiech ausführbar.

Ein Versatz des Fahrzeugs parallel zu einer zwischen den Teilwicklungen einer Wicklung liegenden Mittelebene, also ein seitlicher Versatz zur Wicklung, hat keine wesentlichen Einflüsse auf die Datenübertragung zwischen stationärem Teil und Fahrzeug. Ein Versatz in der senkrechten Richtung hierzu verschlechtert die Datenübertragung stark - auch wenn nur kleine Verschiebungen vorliegen.

Da aber jeder Wicklung eine weitere, senkrecht verdreht angeordnete Wicklung zugeordnet ist, ist über eine der Wicklungen eine Datenübertragung hervorragend ausführbar, solange nicht die Beabstandung zwischen Fahrzeug und Wicklungsbereich 3 größer als die Reichweite ist. Daher wird bei weiteren erfindungsgemäßen Ausführungsbeispielen bei Bedarf die Wicklung mit den Anschlüssen (a, b, c) getauscht mit den Anschlüssen (a', b', c') der anderen Wicklung.

Bei weiteren erfindungsgemäßen Ausführungsbeispielen wird vom Sender 31 ein Information ausgesendet und in einem ersten Zeitabschnitt von einer Teilwicklung der Wicklung des Empfängers 630 empfangen. Nachfolgend wird in einem anderen Zeitabschnitt Information von der anderen Teilwicklung der Wicklung empfangen. Durch Vergleich der Beträge der jeweils induzierten Spannungen wird ermittelt, ob sich er die erste oder die andere Teilwicklung der Wicklung näher am Empfänger befindet.

Da die andere Wicklung um 90° verdreht angeordnet ist, ist auch hier die Bestimmung ermöglicht, welche der zugehörigen Teilwicklungen näher am Sender ist.

Somit ist eine Richtung bestimmbar, entlang der sich das Fahrzeug eine möglichst kleine Wegstrecke bewegen muss, um nach wiederholter Ausführung der vorgenannten Schritte an die optimale Position zu gelangen.

Außerdem sind auch die jeweiligen Beträge der induzierten Spannungen berücksichtigbar, so dass insgesamt eine verbesserte Richtung bestimmbar ist, in welcher der Sender 31 sich vom Empfänger 630 aus gesehen befindet. Somit gelangt das Fahrzeug sogar in sehr wenigen Wiederholungen und bei jeweils größeren zurückgelegten Wegstrecken an die optimale Position.

### Bezugszeichenliste

- 1: Modem
- 2: Sender und Empfänger
- 3: Wirkungsbereich
- 4: Metallstück
- 5: Boden
- 30: Empfänger
- 31: Sender

- 50: erste Form der Wicklung, welche aus zwei rechteckförmigen Teilwicklungen besteht
- 51: zweite Form der Wicklung, welche aus zwei kreisförmigen Teilwicklungen besteht
- 52: dritte Form der Wicklung, welche aus zwei quadratischen Teilwicklungen besteht

- 70: Halteteil, insbesondere Fundamentplatte
- 71: Primärwicklung

- 601: Modem
- 630: Empfänger
- 631: Sender

## Patentansprüche

1. Verfahren zum Detektieren von Metallstücken (4) bei einem System zur berührungslosen Übertragung von Energie von einer Primärwicklung an ein eine an die Primärwicklung (71) induktiv koppelbare Sekundärwicklung umfassendes Fahrzeug,
wobei in die Primärwicklung (71) ein Wechselstrom eingeprägt wird,
wobei im Bereich der Primärwicklung (71) eine Wicklungsanordnung angeordnet ist, welche eine erste und eine zweite Wicklung aufweist,
insbesondere wobei die Wicklungsanordnung mittig zur Primärwicklung (71) angeordnet ist,
**dadurch gekennzeichnet, dass**
die erste und zweite Wicklung jeweils aus zumindest zwei Teilwicklungen zusammengesetzt sind, wobei die von den Teilwicklungen einer jeweiligen Wicklung umwickelten Flächen einem von der Primärwicklung (71) erzeugten magnetischen Fluss ausgesetzt sind und voneinander beabstandet sind, insbesondere derart, dass sie von keiner Flusslinie des von der Primärwicklung (71) erzeugten Flusses gemeinsam durchsetzt sind,
wobei die Teilwicklungen jeweils eine derartige Wicklungszahl und eine derartige umwickelte Fläche aufweisen, dass die vom, insbesondere sich ändernden, magnetischen Fluss der Primärwicklung (71) induzierten Spannungen der Teilwicklungen betragsgleich sind,
wobei die erste Wicklung derart verdreht und beabstandet zur zweiten Wicklung angeordnet ist, dass jede Teilwicklung der ersten Wicklung an jede Teilwicklung der zweiten Wicklung induktiv gekoppelt angeordnet ist,
wobei an die erste Wicklung eine Wechselspannung angelegt wird und die Differenz der Beträge der an den Teilwicklungen der zweiten Wicklung induzierten Spannungen auf Überschreiten eines kritischen Wertes überwacht wird.

2. Verfahren nach Anspruch 1,
**dadurch gekennzeichnet, dass**
- ein erster Anteil von Flusslinien die erste Teilwicklung der ersten Wicklung und die erste Teilwicklung der zweiten Wicklung durchsetzen,
- ein zweiter Anteil von Flusslinien die erste Teilwicklung der ersten Wicklung und die zweite Teilwicklung der zweiten Wicklung durchsetzen,
- ein dritter Anteil von Flusslinien die zweite Teilwicklung der ersten Wicklung und die erste Teilwicklung der zweiten Wicklung durchsetzen,
- ein vierter Anteil von Flusslinien die zweite Teilwicklung der ersten Wicklung und die zweite Teilwicklung der zweiten Wicklung durchsetzen,
wobei diese Anteile im Wesentlichen gleich groß sind.

3. Verfahren nach einem der vorangegangenen Ansprüche,
**dadurch gekennzeichnet, dass**
die Teilwicklungen als Flachwicklungen ausgeführt sind, insbesondere parallel zueinander ausgerichtet sind.

4. Verfahren nach einem der vorangegangenen Ansprüche,
**dadurch gekennzeichnet, dass**
die induzierten Spannungen der beiden Teilwicklungen einer Wheatstone-Brückenschaltung zugeführt werden.

5. System zur berührungslosen Übertragung von Energie von einer Primärwicklung (71) an ein eine an die Primärwicklung (71) induktiv koppelbare Sekundärwicklung umfassendes Fahrzeug,
wobei die Primärwicklung (71) stationär angeordnet ist und mit einem Wechselstrom beaufschlagbar ist,
wobei eine Wicklungsanordnung stationär angeordnet ist, welche eine erste und eine zweite Wicklung aufweist,
insbesondere wobei die Wicklungsanordnung mittig zur Primärwicklung (71) angeordnet ist, wobei
die erste und zweite Wicklung jeweils aus zumindest zwei Teilwicklungen zusammengesetzt ist, wobei die von den Teilwicklungen einer jeweiligen Wicklung umwickelten Flächen einem von der Primärwicklung (71) erzeugten magnetischen Fluss ausgesetzt sind und voneinander beabstandet sind, insbesondere derart, dass sie von keiner Flusslinie des von der Primärwicklung (71) erzeugten Flusses gemeinsam durchsetzt sind,
wobei die Teilwicklungen jeweils eine derartige Wicklungszahl und eine derartige umwickelte Fläche aufweisen, dass die vom, insbesondere sich ändernden, magnetischen Fluss der Primärwicklung (71) induzierten Spannungen der Teilwicklungen betragsgleich sind,
insbesondere wobei die erste Wicklung derart verdreht zur zweiten Wicklung angeordnet ist, dass jede Teilwicklung der ersten Wicklung an jede Teilwicklung der zweiten Wicklung induktiv gekoppelt angeordnet ist; **dadurch gekennzeichnet, dass** das System zur Durchführung eines Verfahrens nach einem der vorangegangenen Ansprüche vorgesehen ist.

6. System nach Anspruch 5,
**dadurch gekennzeichnet, dass**
die Teilwicklungen jeweils dieselbe Wicklungszahl und umwickelte Fläche aufweisen und die umwickelten Flächen parallel ausgerichtet sind.

7. System nach Anspruch 5 oder 6,
**dadurch gekennzeichnet, dass**
eine weitere Wicklungsanordnung am Fahrzeug angeordnet ist und ebenfalls eine erste und eine zweite Wicklung aufweist, welche wiederum Teilwicklungen aufweisen.

8. System nach einem der Ansprüche 5 bis 7,
**dadurch gekennzeichnet, dass**
die Wicklungen jeweils eine Mittelanzapfung aufweisen.

9. System nach einem der Ansprüche 5 bis 8,
**dadurch gekennzeichnet, dass**
die Wicklungen eben ausgeführt sind, insbesondere parallel zueinander ausgerichtet sind und/oder parallel zueinander ausgerichtete umwickelte Flächen aufweisen.

## Claims

1. Method for detecting metal pieces (4) in a system for the contactless transmission of energy from a primary winding to a vehicle comprising a secondary winding which can be inductively coupled to the primary winding (71),
wherein an alternating current is applied to the primary winding (71),
wherein a winding arrangement is arranged in the region of the primary winding (71), which winding arrangement has a first and a second winding,
in particular wherein the winding arrangement is arranged centrally with respect to the primary winding (71),
**characterised in that**
the first and second windings are each composed of at least two part-windings, wherein the areas around which the part-windings of a respective winding are wound are subjected to a magnetic flux generated by the primary winding (71) and are spaced apart from one another, in particular in such a manner that no flux line of the flux generated by the primary winding (71) passes through said areas together,
wherein the part-windings each have such a number of windings and such a wound area that the voltages of the part-windings, which voltages are induced by the, in particular changing, magnetic flux of the primary winding (71) are equal in magnitude,
wherein the first winding is arranged rotated and spaced with respect to the second winding in such a manner that each part-winding of the first winding is arranged inductively coupled to each part-winding of the second winding,
wherein an alternating voltage is applied to the first winding and the difference of the magnitudes of the voltages induced at the part-windings of the second winding is monitored for exceeding a critical value.

2. Method according to Claim 1,
**characterised in that**
- a first proportion of flux lines pass through the first part-winding of the first winding and the first part-winding of the second winding,
- a second proportion of flux lines pass through the first part-winding of the first winding and the second part-winding of the second winding,
- a third proportion of flux lines pass through the second part-winding of the first winding and the first part-winding of the second winding,
- a fourth proportion of flux lines pass through the second part-winding of the first winding and the second part-winding of the second winding,
wherein these proportions are of substantially equal size.

3. Method according to one of the preceding claims,
**characterised in that**
the part-windings are designed as flat windings, in particular are oriented parallel to one another.

4. Method according to one of the preceding claims,
**characterised in that**
the induced voltages of the two part-windings are supplied to a Wheatstone bridge circuit.

5. System for the contactless transmission of energy from a primary winding (71) to a vehicle comprising a secondary winding which can be inductively coupled to the primary winding (71),
wherein the primary winding (71) is arranged in a stationary manner and can be supplied with an alternating current,
wherein a winding arrangement is arranged in a stationary manner, which winding arrangement has a first and a second winding,
in particular wherein the winding arrangement is arranged centrally with respect to the primary winding (71),
wherein
the first and second windings are each composed of at least two part-windings, wherein the areas around which the part-windings of a respective winding are wound are subjected to a magnetic flux generated by the primary winding (71) and are spaced apart from one another, in particular in such a manner that no flux line of the flux generated by the primary winding (71) passes through said areas together,
wherein the part-windings each have such a number of windings and such a wound area that the voltages of the part-windings, which voltages are induced by the, in particular changing, magnetic flux of the primary winding (71) are equal in magnitude,
in particular wherein the first winding is arranged rotated with respect to the second winding in such a manner that each part-winding of the first winding is arranged inductively coupled to each part-winding of the second winding,
**characterised in that** the system is provided for carrying out a method according to one of the preceding claims.

6. System according to Claim 5,
**characterised in that**
the part-windings each have the same number of windings and wound area and the wound areas are oriented parallel.

7. System according to Claim 5 or 6,
**characterised in that**
a further winding arrangement is arranged on the vehicle and likewise has a first and a second winding, which in turn have part-windings.

8. System according to one of Claims 5 to 7,
**characterised in that**
the windings each have a centre tapping.

9. System according to one of Claims 5 to 8,
**characterised in that**
the windings are of flat design, in particular are oriented parallel to one another and/or have wound areas oriented parallel to one another.

## Revendications

1. Procédé de détection de pièces métalliques (4) dans un système de transmission d'énergie sans contact entre un bobinage primaire et un véhicule comprenant un bobinage secondaire pouvant être couplé inductivement avec le bobinage primaire (71),
un courant alternatif étant appliqué dans le bobinage primaire (71),
un agencement de bobinages qui présente un premier et un deuxième bobinage étant disposé dans la zone du bobinage primaire (71),
l'agencement de bobinages étant en particulier centré par rapport au bobinage primaire (71),
**caractérisé en ce que**
le premier et le deuxième bobinage sont composés chacun d'au moins deux bobinages partiels, les surfaces entourées par les bobinages partiels de chaque bobinage étant exposées à un flux magnétique produit par le bobinage primaire (71) et espacées l'une de l'autre en particulier de manière à ne pas être traversées ensemble par une ligne de flux du flux produit par le bobinage primaire (71),
les bobinages partiels possédant chacun un nombre de spires et une surface entourée tels que les tensions qui sont induites dans les bobinages partiels par le flux magnétique, en particulier variable, du bobinage primaire (71) soient de même valeur,
le premier bobinage étant tourné et espacé par rapport au deuxième bobinage de telle manière que chaque bobinage partiel du premier bobinage soit couplé inductivement avec chaque bobinage partiel du deuxième bobinage,
une tension alternative étant appliquée au premier bobinage et la différence des valeurs des tensions induites dans les bobinages partiels du deuxième bobinage étant surveillée en ce qui concerne le dépassement d'une valeur critique.

2. Procédé selon la revendication 1,
**caractérisé en ce que**
- une première partie des lignes de flux traverse le premier bobinage partiel du premier bobinage et le premier bobinage partiel du deuxième bobinage,
- une deuxième partie des lignes de flux traverse le premier bobinage partiel du premier bobinage et le deuxième bobinage partiel du deuxième bobinage,
- une troisième partie des lignes de flux traverse le deuxième bobinage partiel du premier bobinage et le premier bobinage partiel du deuxième bobinage,
- une quatrième partie des lignes de flux traverse le deuxième bobinage partiel du premier bobinage et le deuxième bobinage partiel du deuxième bobinage,
ces parties étant sensiblement de même taille.

3. Procédé selon l'une des revendications précédentes,
**caractérisé en ce que**
les bobinages partiels sont réalisés sous la forme de bobinages plats, en particulier orientés parallèlement les uns aux autres.

4. Procédé selon l'une des revendications précédentes,
**caractérisé en ce que**
les tensions induites dans les deux bobinages partiels sont amenées à un pont de Wheatstone.

5. Système de transmission d'énergie sans contact entre un bobinage primaire (71) et un véhicule comprenant un bobinage secondaire pouvant être couplé inductivement avec le bobinage primaire (71),
le bobinage primaire (71) étant disposé de manière stationnaire et pouvant être parcouru par un courant alternatif,
un agencement de bobinages étant disposé de manière stationnaire, lequel présente un premier et un deuxième bobinage,
l'agencement de bobinages étant en particulier centré par rapport au bobinage primaire (71),
le premier et le deuxième bobinage étant composés chacun d'au moins deux bobinages partiels, les surfaces entourées par les bobinages partiels de chaque bobinage étant exposées à un flux magnétique produit par le bobinage primaire (71) et espacées l'une de l'autre en particulier de manière à ne pas être traversées ensemble par une ligne de flux du flux produit par le bobinage primaire (71),
les bobinages partiels possédant chacun un nombre de spires et une surface entourée tels que les tensions qui sont induites dans les bobinages partiels par le flux magnétique, en particulier variable, du bobinage primaire (71) soient de même valeur,
le premier bobinage étant en particulier tourné et espacé par rapport au deuxième bobinage de telle manière que chaque bobinage partiel du premier bobinage soit couplé inductivement avec chaque bobinage partiel du deuxième bobinage,
**caractérisé en ce que**
le système est prévu pour mettre en oeuvre un procédé selon l'une des revendications précédentes.

6. Système selon la revendication 5,
**caractérisé en ce que**
les bobinages partiels présentent tous le même nombre de spires et la même surface entourée et les surfaces entourées sont orientées parallèlement.

7. Système selon la revendication 5 ou 6,
**caractérisé en ce que**
un autre agencement de bobinages est disposé sur le véhicule et présente également un premier et un deuxième bobinage qui présentent eux-mêmes des bobinages partiels.

8. Système selon l'une des revendications 5 à 7,
**caractérisé en ce que**
les bobinages présentent chacun une prise médiane.

9. Système selon l'une des revendications 5 à 8,
**caractérisé en ce que**
les bobinages sont de forme plate, en particulier orientés parallèlement les uns aux autres et/ou présentent des surfaces entourées orientées parallèlement les unes aux autres.
